# EUROPÄISCHE PATENTANMELDUNG

(11) **EP 4 660 123 A1**
(43) Veröffentlichungstag der Anmeldung: **10.12.2025**
(21) Anmeldenummer: 24180464.0
(22) Anmeldetag: 06.06.2024
(51) Int. Cl.: B66C 13/46, B66C 13/48, B66C 19/00, G01S 17/88

(54) **VORRICHTUNG UND VERFAHREN ZUM ÜBERWACHEN EINER ZU VERLADENDEN FRACHT**

(71) Anmelder: SICK AG, 79183 Waldkirch (DE)
(72) Erfinder: Nasimzada, Wahid, 22049 Hamburg (DE); Wiegand, Christoph, 23627 Groß Grönau (DE); Kifmann, Jan, 22946 Trittau (DE); Ludwig, Hauke, 21037 Hamburg (DE); Spiegelhalter, Jörg, 78086 Brigachtal (DE); Zhang, Jisheng, 79183 Waldkirch (DE)

(57) **Zusammenfassung**

Eine Vorrichtung zum Überwachen einer zu verladenden Fracht (12) weist wenigstens einen Sensor (24) auf, der ausgebildet ist, um wenigstens einen Satz räumlicher Koordinaten von Messpunkten (28) zu erfassen (42), wobei die Messpunkte (28) in einem Raumbereich liegen, der die Fracht (12) umfasst. Eine Auswertungseinheit (32) ist ausgebildet, um aus dem Satz räumlicher Koordinaten der Messpunkte (28) zumindest einen Teil einer Kontur der Fracht (12) zu ermitteln (44) und einen Vergleich (46) zwischen der ermittelten Kontur der Fracht (12) und wenigstens einer vorgegebenen Kontur durchzuführen. Eine Ausgabeeinheit (34) ist ausgebildet, um ein auf einem Ergebnis des Vergleichs basierendes Signal auszugeben.

## Beschreibung

Die Erfindung betrifft eine Vorrichtung und ein Verfahren zum Überwachen einer zu verladenden Fracht, insbesondere eines oder mehrerer Container, nach dem Oberbegriff von Anspruch 1 beziehungsweise 12.

Beim Verladen von Fracht in Häfen spielt die Behandlung von Containern eine zentrale Rolle. Zum Bewegen eines Containers, d.h. zum Aufnehmen, Transportieren und erneuten Absetzen eines solchen, wird üblicherweise ein STS-Kran (STS vom Englischen: Ship To Shore) oder ein RTG-Kran (RTG vom Englischen: Rubber Tyred Gantry) verwendet. Der STS- oder RTG-Kran weist eine Laufkatze mit einem Containergeschirr, auch Spreader genannt auf, an dem Drehverriegelungen (sogenannte Twistlocks) angebracht sind. Die Twistlocks sind dafür vorgesehen, in Aufnahmeelemente (Cornercasts) des Containers einzugreifen und in diesen befestigt zu werden. Nachdem der Spreader mittels der Twistlocks an dem Frachtcontainer befestigt ist, kann dieser mittels der Laufkatze des STS- oder RTG-Krans angehoben und zu einer gewünschten Position transportiert werden, an welcher der Container wieder abgesetzt wird.

Die am weitesten verbreiteten Container haben eine Länge von 20 Fuß (6,058 m) oder 40 Fuß (12,192 m), wobei der Spreader eines Krans in der Regel dazu in der Lage ist, einen 40 Fuß Container oder zwei hintereinander angeordnete 20 Fuß Container aufzunehmen. Die Bedienperson des Krans kann allerdings aus ihrer Kabine häufig nicht sicher unterscheiden, ob es sich bei dem Container unterhalb des Spreaders um einen 40 Fuß Container oder um zwei 20 Fuß Container handelt. Die Gefahr liegt darin, dass der Kranführer eine Fehlentscheidung auf Grund von schlechten/eingeschränkten Sichtverhältnissen oder Nachlässigkeit trifft und mit dem Spreader nur die jeweils äußeren Cornercasts der beiden Container mit Twistlocks sichert und die innen liegenden Cornercasts nicht arretiert werden. Beim anschließenden Hebevorgang können sich die Container verkanten oder schlimmstenfalls herabstürzen. Die Folge ist eine aufwendige und damit kostspielige Bergung. Dieser unsichere Hebevorgang birgt außerdem eine große Gefahr für Mensch und Maschine.

Aus dem Stand der Technik sind Systeme bekannt, die das Vorhandensein einer Lücke zwischen zwei zu greifenden Containern nach Aufsetzen des Spreaders auf den zu greifenden Containern erkennen können. In dieser Position wird mittels photoelektrischer Sensoren die obere und seitliche Fläche der zu greifenden Container untersucht. Sollte mittels der Sensoren eine Lücke detektiert werden, wird dem Kranfahrer beziehungsweise einem automatisierten Kransystem die Erkennung von zwei 20 Fuß Containern gemeldet. Anderenfalls wird ein 40 Fuß Container gemeldet. Nachteilig an diesem Verfahren ist, dass die Erkennung der Container nur in der Zielposition des Spreaders möglich ist und auch nur dann, wenn der Spreader nahezu mittig positioniert ist. Sobald sich der Spreader um wenige Zentimeter orthogonal zur Container-Lücke verschoben auf den Containern befindet, sind die Sensoren, welche die Lücke erfassen sollen, nicht mehr zwischen den Containern. Dadurch wird die Detektion erschwert bzw. nicht möglich sein und fälschlicherweise einen 40 Fuß statt zwei 20 Fuß Containern als detektiert meldet

Es ist daher Aufgabe der Erfindung, eine Vorrichtung und ein Verfahren zum Überwachen einer zu verladenden Fracht, insbesondere eines oder mehrerer Container zu verbessern.

Diese Aufgabe wird durch eine Vorrichtung und ein Verfahren zum Überwachen einer zu verladenden Fracht, insbesondere eines oder mehrerer Container nach Anspruch 1 beziehungsweise 12 gelöst.

Eine erfindungsgemäße Vorrichtung zum Überwachen einer zu verladenden Fracht, insbesondere eines oder mehrerer Container, umfasst zunächst wenigstens einen Sensor, eine Auswertungseinheit und eine Ausgabeeinheit. Der Sensor ist ausgebildet, um wenigstens einen Satz räumlicher Koordinaten von Messpunkten zu erfassen. Die Messpunkte liegen in einem Raumbereich, der die Fracht umfasst. Die Auswertungseinheit ist ausgebildet, um aus dem Satz räumlicher Koordinaten der Messpunkte zumindest einen Teil einer Kontur der Fracht zu ermitteln und einen Vergleich zwischen der ermittelten Kontur der Fracht und wenigstens einer vorgegebenen Kontur durchzuführen. Die Ausgabeeinheit ist ausgebildet, um ein auf einem Ergebnis des Vergleichs basierendes Signal auszugeben.

Die Erfindung hat den Vorteil, dass eine interessierende Beschaffenheit einer Fracht während eines Verladevorgangs einfach und zuverlässig überprüft werden kann. Es ist insbesondere nicht nötig die gesamte Kontur der Fracht zu erfassen, sondern lediglich den Teil einer Kontur, der mit der vorgegebenen Kontur zu vergleichen ist, die ebenfalls bevorzugt nur einen Teil der Kontur der zu verladenden Fracht, beispielsweise einen Längs- oder Querschnitt aufweisen kann. Dadurch wird sowohl die Datenaufnahme als auch die Datenanalyse deutlich vereinfacht. Dies ermöglicht eine Steigerung der betrieblichen Gesamteffizienz von Fracht- und insbesondere Containerterminals durch erhöhte Sicherheit beim Handling der Fracht beziehungsweise Container und Steigerung des Durchsatzes in der dynamischen und komplexen Umgebung des Containerumschlags.

Die vorgegebene Kontur kann bevorzugt ein Teil einer Kontur einer Oberseite, insbesondere eine Länge, einer Fracht, beispielsweise eines Containers, sein. Die Oberseite einer Fracht ist in der Regel leicht zu erfassen, insbesondere dann, wenn der Sensor oberhalb der Fracht, beispielsweise an einem Kran zum Verladen der Fracht angeordnet ist. Der Begriff Kontur ist im Sinne der vorliegenden Erfindung breit auszulegen und umfasst nicht nur die exakte Kontur einer Fracht, beispielsweise die typische, korrugierte Oberflächenstruktur eines Frachtcontainers, sondern beispielswiese auch eine Länge oder Breite einer Oberseite einer Fracht.

Eine erste vorgegebene Kontur kann bevorzugt einen Teil einer Oberseite eines einzelnen Containers und/oder zweite vorgegebene Kontur einen Teil einer Oberseite zweier hintereinander angeordneter Container umfassen. Durch den Vergleich der ermittelten Kontur der Fracht mit der beziehungsweise den vorgegebenen Konturen kann eine Beschaffenheit der Fracht auf einfache Weise bestimmt und eine Information über die Fracht ausgegeben werden, was die weitere Behandlung der Fracht beim Verladen erleichtert. So unterscheidet sich beispielsweise die Kontur der Oberseite eines einzelnen Containers von der Kontur der Oberseite zweier hintereinander angeordneter Container dadurch, dass zwischen den zwei hintereinander angeordneten Containern eine Lücke besteht. Somit kann auf einfache Weise unterschieden werden, ob der Sensor einen einzelnen Container oder zwei hintereinander angeordnete Container erfasst hat.

Eine erste vorgegebene Kontur kann bevorzugt einen Teil einer Oberseite eines 40 Fuß Containers und/oder eine zweite vorgegebene Kontur einen Teil einer Oberseite eines 20 Fuß Containers und/oder eine dritte vorgegebene Kontur einen Teil einer Oberseite zweier hintereinander angeordneter 20 Fuß Container umfassen. Durch den Vergleich der ermittelten Kontur der Fracht mit der beziehungsweise den vorgegebenen Konturen kann so Länge und Anzahl der zu verladenden Container auf einfache Weise bestimmt werden. So unterscheidet sich beispielsweise die Kontur der Oberseite eines 40 Fuß Containers von der Kontur der Oberseite zweier hintereinander angeordneter 20 Fuß Container bei im Wesentlichen gleicher Länge dadurch, dass zwischen den 20 Fuß Containern eine Lücke besteht. Im Bereich dieser Lücke unterscheidet sich die Kontur und somit die räumliche Lage der vom Sensor erfassten Messpunkte deutlich von der räumlichen Lage der Messpunkte, die an vergleichbarer Stelle eines 40 Fuß Containers erfasst werden. Somit kann auf einfache Weise unterschieden werden, ob der Sensor einen 20 Fuß Container, einen 40 Fuß Container oder zwei hintereinander angeordnete 20 Fuß Container erfasst hat.

Der Sensor kann als ein LIDAR-Sensor ausgebildet sein, mit dem ein vorbestimmter Raumbereich abgetastet werden kann, der durch das Sichtfeld des LIDAR-Sensors vorgegeben ist. Der Sensor kann also zur Entfernungsmessung ausgebildet sein, beispielsweise durch eine Messung der Lichtlaufzeit von vom Sensor ausgesandten Lichtpulsen. Durch jede Entfernungsmessung kann die räumliche Lage z.B. eines Messpunkts der Oberfläche des Containers als räumliche Koordinaten ermittelt werden.

In einer Ausführungsform der Erfindung kann der Sensor als ein 2D-LIDAR-Sensor ausgebildet sein, wobei ein von einem Laser erzeugter Lichtstrahl mit Hilfe einer Ablenkeinheit periodisch einen vorbestimmten Raumbereich abtastet. Das Licht wird an Objekten in dem Raumbereich (z.B. der Oberfläche eines Containers) remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Raumbereich in zweidimensionalen Polarkoordinaten erfasst. Damit lassen sich die Positionen von Objekten ermitteln oder deren Kontur bestimmen. Mit einem 2D-LIDAR-Sensor ist eine Ermittlung einer Kontur der Fracht entlang einer Line möglich, was für eine Vielzahl von Anwendungen wie der oben beschriebenen Unterscheidung eines 40 Fuß Containers von zwei hintereinander angeordneten 20 Fuß Containern bereits ausreichend ist. Insbesondere kann auch ein Abstand zwischen zwei Containern bestimmt werden. Diese Information ist beispielsweise für eine korrekte Positionierung beim Verladen von Containern auf einen LKW-Anhänger notwendig.

In einer alternativen Ausführungsform der Erfindung kann der Sensor als ein 3D-LIDAR-Sensor ausgebildet sein, wobei eine Relativbewegung in Querrichtung ebenfalls erfasst wird, beispielsweise durch einen weiteren Bewegungsfreiheitsgrad der Ablenkeinheit in dem Laserscanner. Somit kann eine Kontur der Fracht entlang mehrerer, räumlich voneinander beabstandeten Linien ermittelt werden. Dies ermöglicht eine redundante Auswertung und somit genauere Ergebnisse bei der Ermittlung der Kontur der Fracht. Ein 3D-LIDAR Sensor kann weiterhin dazu eingerichtet sein, eine Oberseite der Fracht vollständig zu erfassen. Bei einer aus zwei Containern bestehenden Fracht kann somit auch eine seitliche Verschiebung der Container zueinander, also eine Verschiebung senkrecht zur Längsachse der Container, erfasst werden.

Der Sensor kann bevorzugt an einem sogenannten Spreader, also einem Hebegeschirr eines Krans angebracht sein, der zum Aufnehmen der Fracht vorgesehen ist. Der Sensor kann dann eine Kontur der Oberseite der Fracht beim Herablassen des Spreaders auf die Fracht erfassen. Typische LIDAR Sensoren können ein Sichtfeld von mehr als 180 Grad erfassen, so dass in der Regel die gesamte Oberseite der Fracht bis zum Aufsetzen des Spreader auf der Fracht erfasst werden kann. Das von der Ausgabeeinheit ausgegebene Signal kann eine Information zum Einstellen des Spreaders umfassen. Besteht die Fracht beispielsweise aus einem oder mehreren Containern, kann die Information die Zahl und Größe der Container umfassen, oder eine Angabe über die am Spreader zu aktivierenden Drehverriegelungen (Twistlocks) um den oder die Container sicher am Spreader zu befestigen. Weiterhin kann die Information eine Positionierung des Spreaders relativ zur Fracht umfassen.

Die Ausgabeeinheit kann bevorzugt dazu ausgebildet sein, um das Signal an eine Bedienperson des Krans auszugeben, beispielsweise über entsprechende Anzeigeelemente oder über Sprachausgabe. Die Bedienperson ist dann in der Lage, den Spreader basierend auf der angezeigten Information korrekt auf die entsprechende Fracht einzustellen. Alternativ oder zusätzlich kann die Ausgabeeinheit dazu ausgebildet sein, um das Signal an eine Steuerung des Krans auszugeben, beispielweise im Falle eines automatisierten Krans, wobei zusätzlich eine Ausgabe der Information an eine Bedienperson zur Überwachung des automatisierten Krans erfolgen kann.

Gemäß einer weiteren Ausführungsform kann die Auswertungseinheit ausgebildet sein, um aus dem Satz räumlicher Koordinaten der Messpunkte einen Abstand der Fracht zum Spreader zu ermitteln, und die Ausgabeeinheit kann ausgebildet sein, um den ermittelten Abstand an eine Bedienperson und/oder an eine Steuerung des Krans auszugeben. Dadurch kann die Fracht effizient mit dem Spreader angefahren werden, beispielsweise kann die Annäherungsgeschwindigkeit des Spreader an den Abstand zur Fracht angepasst werden.

Gemäß einer weiteren Ausführungsform kann die Auswertungseinheit ausgebildet sein, um aus dem Satz räumlicher Koordinaten der Messpunkte einen, insbesondere longitudinalen, Versatz der Fracht zum Spreader zu bestimmen, und die Ausgabeeinheit kann ausgebildet sein, um den Versatz an eine Bedienperson und/oder an eine Steuerung des Krans auszugeben. Dadurch kann die Position des Spreader relativ zur Fracht während der Annäherung an die Fracht angepasst werden.

Gemäß einer weiteren Ausführungsform kann die Auswertungseinheit ausgebildet sein, um "Vorwissen" bezüglich der Fracht, beispielsweise bezogen auf einen vordefinierten Raumbereich der Fracht oder deren räumliche Lage bei der Ermittlung der Kontur der Fracht zu verwenden. Derartiges "Vorwissen" kann die Datenmenge reduzieren, die von der Auswertungseinheit zu verarbeiten ist. Dadurch kann sich der computertechnische Aufwand verringern, der zum Betreiben der Vorrichtung erforderlich ist. Ferner kann sich die Verarbeitungsgeschwindigkeit erhöhen.

Gemäß einer weiteren Ausführungsform kann die Auswertungseinheit ausgebildet sein, um aus dem Satz räumlicher Koordinaten der Messpunkte einen Winkel zwischen der Oberseite der Fracht und einer Heberichtung, in der die Fracht vom Kran angehoben wird, zu ermitteln, und die Ausgabeeinheit kann ausgebildet sein, um den ermittelten Winkel an eine Bedienperson und/oder an eine Steuerung des Krans auszugeben. Dadurch kann beim Anheben der Fracht überprüft werden, ob die Fracht korrekt am Spreader befestigt ist. Wären beispielsweise an einem Ende eines Containers die Twistlocks des Spreaders fehlerhafterweise nicht verriegelt, würde der Kran den Container nur an einem Ende anheben, so dass sich der Winkel zwischen der Oberseite des Containers und der Heberichtung beim Hebevorgang ändern würde. Die Auswertungseinheit würde diese Winkeländerung erfassen. Durch die Ausgabe einer Information über die Winkeländerung an die Bedienperson beziehungsweise die Kransteuerung kann der Hebevorgang frühzeitig gestoppt werden, wenn beispielsweise die Winkeländerung einen vorgegebenen Wert überschreitet und somit eine Beschädigung der Fracht oder des Krans vermieden wird.

Die Auswertungseinheit kann Bestandteil des Sensors sein oder Teil einer externen Steuereinheit, die beispielsweise auch die Ausgabeeinheit umfassen kann. Die vorgegebene Kontur beziehungsweise die vorgegebenen Konturen der Fracht können bevorzugt in einer Speichereinheit der Auswertungseinheit hinterlegt sein.

Der Sensor kann eine inertiale Messeinheit (englisch inertial measurement unit, IMU) aufweisen, wobei die Auswertungseinheit ausgebildet sein kann, um Daten der IMU zu empfangen und eine Bewegung des Sensors, insbesondere relativ zur üblicherweise ortsfesten Fracht, zu ermitteln. Unter Kenntnis der Sensorbewegung können mehrere vom Sensor erfasste Sätze räumlicher Koordinaten aufsummiert und somit die Robustheit der Konturbestimmung verbessert werden.

Der Sensor kann als so genannter Solid State Lidar ohne mechanisch bewegliche Komponenten zur Strahlablenkung ausgeführt sein. Ein derartiger Sensor ist besonders robust und kann insbesondere in einer rauen Arbeitsumgebung eine höhere Lebensdauer aufweisen als ein herkömmlicher Lidar Sensor mit rotierender Abtasteinheit.

Weiterer Gegenstand der Erfindung ist ein Verfahren zum Überwachen einer zu verladenden Fracht, insbesondere eines oder mehrerer Container. Gemäß dem Verfahren wird wenigsten ein Satz räumlicher Koordinaten von Messpunkten mittels eines Sensors erfasst. Die Messpunkte liegen in einem Raumbereich, der die Fracht umfasst. Aus dem Satz räumlicher Koordinaten der Messpunkte wird zumindest ein Teil einer Kontur der Fracht ermittelt, beispielswiese durch Segmentierung und Clusterung der vom Sensor erfassten Messpunkte. Anschließend wird ein Vergleich zwischen der ermittelten Kontur der Fracht und wenigstens einer vorgegebenen Kontur der Fracht durchgeführt und ein auf einem Ergebnis des Vergleichs basierendes Signal ausgegeben.

Die vorstehend beschriebene Vorrichtung ist folglich ausgebildet, um mittels des Sensors, der Auswertungseinheit und der Ausgabeeinheit die Schritte des Verfahrens auszuführen. Die vorstehenden Ausführungsformen der erfindungsgemäßen Vorrichtung gelten somit auch für das erfindungsgemäße Verfahren, insbesondere hinsichtlich der Offenbarung, der Vorteile und der bevorzugten Ausführungsformen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Figur 1: eine schematische Darstellung eines Krans mit einer erfindungsgemäßen Vorrichtung um Überwachen einer zu verladenden Fracht.
- Figur 2: ein beispielhaftes Ablaufdiagramm eines erfindungsgemäßen Verfahrens zum Überwachen einer zu verladenden Fracht.
- Figur 3: eine schematische Darstellung eines Ausführungsbeispiels, bei dem die erfindungsgemäße Vorrichtung ausgebildet ist, um wenigstens einen Winkel zwischen der Oberseite der Fracht und einer Heberichtung zu ermitteln.

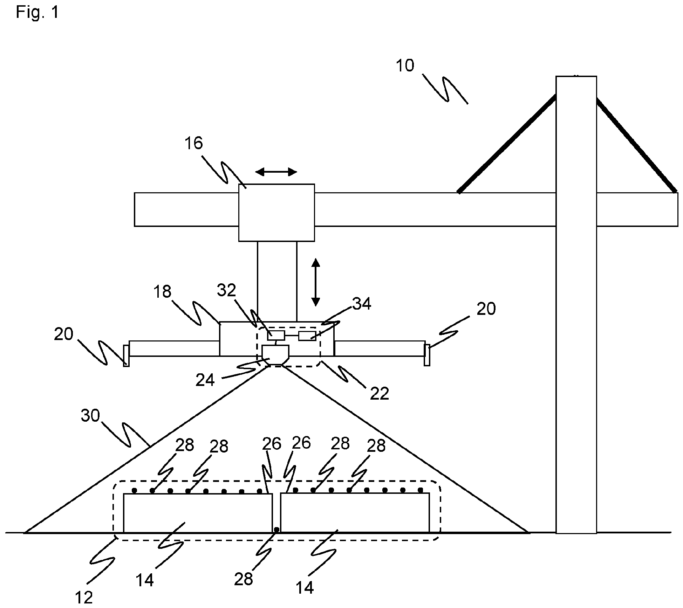

Figur 1 zeigt eine schematische Darstellung eines Krans 10, der zum Verladen einer Fracht 12, beispielsweise von Containern 14 vorgesehen ist. Der Kran 10 umfasst zu diesem Zweck eine Laufkatze 16, an der zum Anheben, Bewegen und Absetzen der Fracht ein Spreader 18 mit sogenannten Twistlocks 20 angebracht ist. Der Kran 10 ist beispielsweise ein STS-Kran (STS vom Englischen: Ship To Shore) oder ein RTG-Kran (RTG vom Englischen: Rubber Tyred Gantry), wie sie typischerweise in modernen Hafenanlagen verwendet werden.

Am Spreader 18 ist eine erfindungsgemäße Vorrichtung 22 mit einem Sensor 24 befestigt, der als LIDAR-Sensor ausgebildet ist. Der Sensor 24 weist daher einen Laserscanner auf, der einen gewissen Raumbereich an der Oberseite 26 der Container 14 erfasst. Der Sensor 24 ist ferner ausgebildet, um einen Satz räumlicher Koordinaten von Messpunkten 28 aus dem Sichtbereich 30 des Sensors 24 zu erfassen, d.h. an der Oberseite 26 der Container 14.

Der Sensor 24 ist mit einer Auswertungseinheit 32 verbunden. Die Verbindung kann kabelgebunden oder kabellos erfolgen. Die Auswertungseinheit 32 ist ausgebildet, um aus dem Satz räumlicher Koordinaten der Messpunkte 28 zumindest einen Teil einer Kontur der Fracht 12 zu ermitteln und einen Vergleich zwischen der ermittelten Kontur der Fracht und wenigstens einer vorgegebenen Kontur der Fracht 12 durchzuführen.

Eine Ausgabeeinheit 34, ist ausgebildet, um ein auf einem Ergebnis des Vergleichs basierendes Signal auszugeben, beispielsweise an eine Bedienperson und/oder eine Steuerung des Krans (nicht gezeigt).

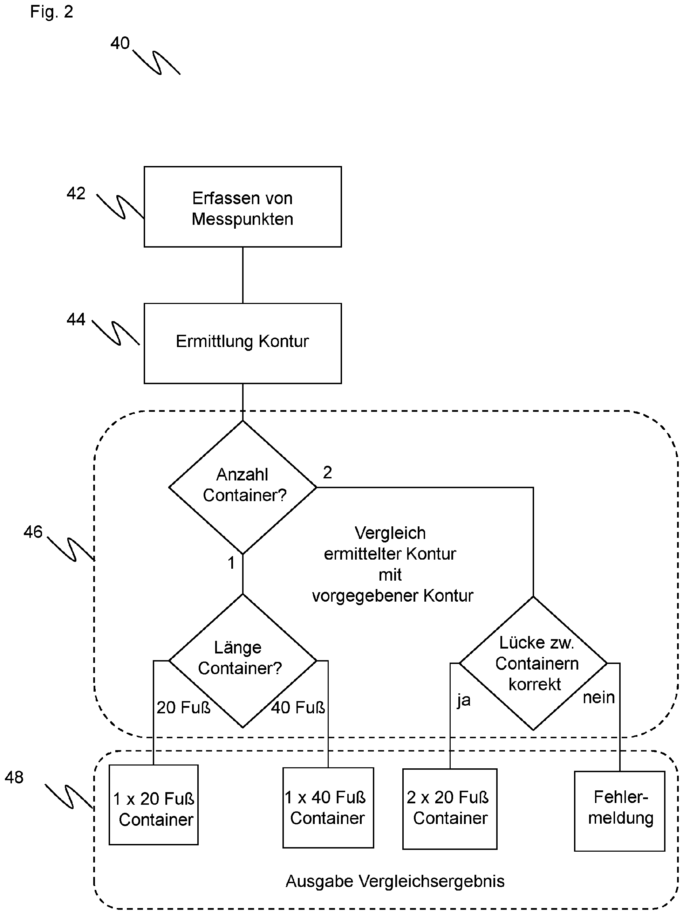

Figur 2 zeigt ein beispielhaftes Ablaufdiagramm 40 eines erfindungsgemäßen Verfahrens zum Überwachen einer zu verladenden Fracht 12.

In einem ersten Schritt erfolgt ein Erfassen 42 wenigstens eines Satzes räumlicher Koordinaten von Messpunkten 28, die in einem Raumbereich liegen, der die Fracht umfasst, mittels eines Sensors 24.

In einem darauffolgenden zweiten Schritt erfolgt ein Ermitteln 44 zumindest eines Teils einer Kontur der Fracht 12 aus dem Satz räumlicher Koordinaten der Messpunkte 28, beispielsweise unter Verwendung von aus der Bildverarbeitung bekannten Segmentierungs- und Clustering Verfahren.

In einem dritten Schritt erfolgt ein Vergleich 46 der ermittelten Kontur der Fracht 12 mit wenigstens einer vorgegebenen Kontur der Fracht 12, beispielsweise eine Überprüfung, ob die ermittelte Kontur der vorgegebenen Kontur eines oder zweier Container entspricht, oder ob eine Länge eines Containers der Länge eines 20 Fuß Containers oder der Länge eines 40 Fuß Containers entspricht.

In einem weiteren vierten Schritt erfolgt dann eine Ausgabe 48 eines Signals, welches auf einem Ergebnis des Vergleichs basierendes Signal ausgegeben wird, beispielsweise die Information, ob es sich bei der Fracht um einen 20 Fuß Container, einen 40 Fuß Container oder um zwei 20 Fuß Container handelt. Basierend auf der Information kann eine Bedienperson oder eine Steuerung des Krans eine Einstellung des Spreader vornehmen.

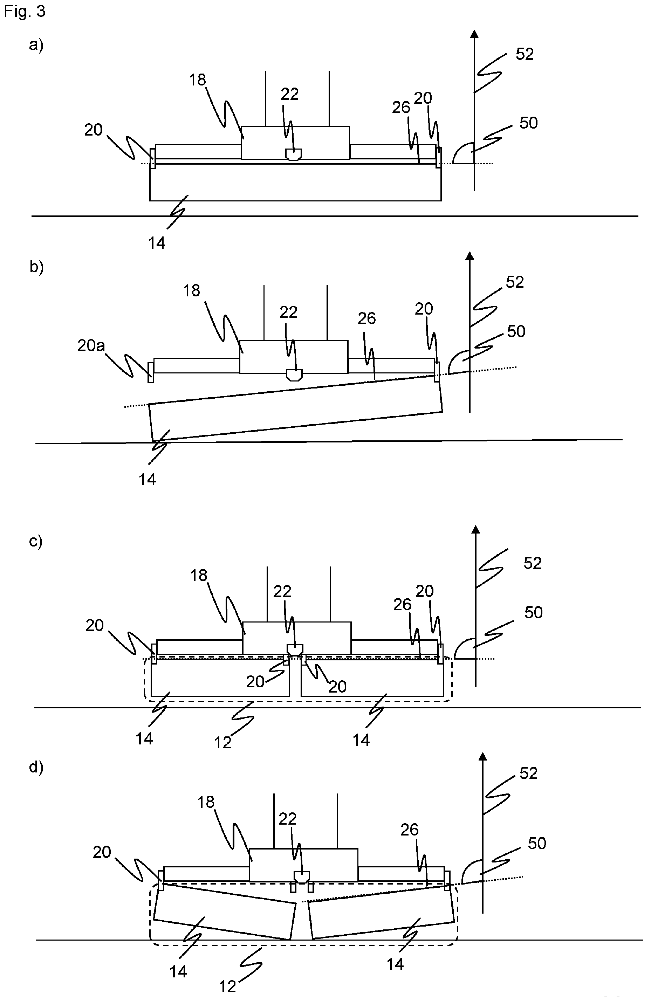

Figur 3 zeigt eine schematische Darstellung eines Ausführungsbeispiels, bei dem die Auswertungseinheit der erfindungsgemäßen Vorrichtung 22 ausgebildet ist, um wenigstens einen Winkel 50 zwischen der Oberseite 26 der Fracht, in diesem Fall eines oder mehrerer Container 14 und einer Heberichtung 52, in die die Fracht vom Kran angehoben wird, zu ermitteln.

In a) ist der Container 14 an den Twistlocks 20 des Spreaders 18 befestigt, um in Heberichtung 52 angehoben zu werden. Der Winkel 50 zwischen der Oberseite 26 des Containers 14 und der Heberichtung 50 liegt dabei mit einer gewissen Toleranz bei 90 Grad, die Oberseite 26 des Containers 14 und die Heberichtung 50 bilden also einen im Wesentlichen rechten Winkel 50.

In b) ist beispielhaft eine Situation dargestellt, in der der Container 14 auf einer Seite nicht am Spreader befestigt ist, da unter anderem ein Twistlock 20a nicht korrekt verriegelt ist. Dadurch wird der Container 14 nur auf einer Seite angehoben, so dass sich der Winkel 50 zwischen Heberichtung 52 und Oberseite 26 des Containers 14 beim Anheben des Containers verändert. Die Auswertungseinheit der Vorrichtung kann diese Winkeländerung erfassen und durch Ausgabe an eine Bedienperson des Krans beziehungsweise an eine Kransteuerung kann der Hebevorgang frühzeitig gestoppt und eine Beschädigung der Fracht oder des Krans vermieden werden.

In c) sind zwei Container 14 an den Twistlocks 20 des Spreaders 18 befestigt, um in Heberichtung 52 angehoben zu werden. Der Winkel 50 zwischen der Oberseite 26 der Container 14 und der Heberichtung 50 liegt dabei mit einer gewissen Toleranz bei 90 Grad, die Oberseite 26 des Containers 14 und die Heberichtung 50 bilden also einen im Wesentlichen rechten Winkel 50.

In d) ist beispielhaft eine Situation dargestellt, in der die Container 14 jeweils in der Mitte des Spreaders 18 nicht am Spreader 18 befestigt sind. Dadurch werden die Container 14 jeweils nur auf einer Seite angehoben, und der Winkel 50 zwischen Heberichtung 52 und der Oberseite 26 des jeweiligen Containers 14 ändert sich beim Anheben der Container 14. Die Auswertungseinheit der Vorrichtung 22 kann diese Winkeländerung erfassen und durch Ausgabe an eine Bedienperson des Krans beziehungsweise an eine Kransteuerung kann der Hebevorgang frühzeitig gestoppt und eine Beschädigung der Fracht oder des Krans vermieden werden. Zusätzlich ändert sich in diesem Fall auch die von der Vorrichtung 22 erfasste Kontur der Oberfläche der in diesem Fall aus den zwei Containern 14 gebildeten Fracht 12. Ein entsprechendes Fehlerbild kann beispielsweise als vorgegebene Kontur in der Auswertungseinheit hinterlegt sein. Wird eine entsprechende Kontur von der Auswertungseinheit erfasst, kann ein Fehlersignal ausgegeben werden.

### Bezugszeichenliste

- 10: Kran
- 12: Fracht
- 14: Container
- 16: Laufkatze
- 18: Spreader
- 20, 20a: Twistlock
- 22: Vorrichtung
- 24: Sensor
- 26: Oberseite
- 28: Messpunkt
- 30: Sichtbereich
- 32: Auswertungseinheit
- 34: Ausgabeeinheit
- 40: Ablaufdiagramm
- 42: Erfassen
- 44: Ermitteln
- 46: Vergleich
- 48: Ausgabe
- 50: Winkel
- 52: Heberichtung

## Patentansprüche

1. Vorrichtung (22) zum Überwachen einer zu verladenden Fracht (12), insbesondere eines oder mehrerer Container (14), umfassend:
wenigstens einen Sensor (24), der ausgebildet ist, um wenigstens einen Satz räumlicher Koordinaten von Messpunkten (28) zu erfassen, wobei die Messpunkte (28) in einem Raumbereich liegen, der die Fracht (12) umfasst,
eine Auswertungseinheit (32), die ausgebildet ist, um:
aus dem Satz räumlicher Koordinaten der Messpunkte (28) zumindest einen Teil einer Kontur der Fracht (12) zu ermitteln und einen Vergleich zwischen der ermittelten Kontur der Fracht (12) und wenigstens einer vorgegebenen Kontur durchzuführen, und
eine Ausgabeeinheit (34), die ausgebildet ist, um ein auf einem Ergebnis des Vergleichs basierendes Signal auszugeben.

2. Vorrichtung (22) nach Anspruch 1, wobei die vorgegebene Kontur eine Oberseite einer Fracht umfasst.

3. Vorrichtung (22) nach einem der vorstehenden Ansprüche, wobei eine erste vorgegebene Kontur eine Oberseite eines einzelnen Containers, und/oder eine zweite vorgegebene Kontur eine Oberseite zweier hintereinander angeordneter Container umfasst.

4. Vorrichtung (22) nach Anspruch 1 oder 2, wobei eine erste vorgegebene Kontur eine Oberseite eines 40 Fuß Containers, und/oder eine zweite vorgegebene Kontur eine Oberseite eines 20 Fuß Containers und/oder eine dritte vorgegebene Kontur eine Oberseite zweier hintereinander angeordneter 20 Fuß Container umfasst.

5. Vorrichtung (22) nach einem der vorstehenden Ansprüche, wobei der Sensor (24) als 2D-LIDAR-Sensor ausgebildet ist:

6. Vorrichtung (22) nach einem der Ansprüche 1 bis 4, wobei der Sensor (24) als 3D-LIDAR-Sensor ausgebildet ist.

7. Vorrichtung (22) nach einem der vorstehenden Ansprüche, wobei der Sensor (24) an einem Spreader (18) eines Krans (10) angebracht ist, der zum Aufnehmen der Fracht (12) vorgesehen ist.

8. Vorrichtung (22) nach Anspruch 7, wobei das Signal eine Information zum Einstellen des Spreaders (18) umfasst und die Ausgabeeinheit (34) ausgebildet ist, um das Signal an eine Bedienperson und/oder an eine Steuerung des Krans (10) auszugeben.

9. Vorrichtung (22) nach Anspruch 7, wobei die Auswertungseinheit (32) ausgebildet ist, um aus dem Satz räumlicher Koordinaten der Messpunkte (28) einen Abstand der Fracht (12) zum Spreader (18) zu bestimmen, und die Ausgabeeinheit (34) ausgebildet ist, um den Abstand an eine Bedienperson und/oder an eine Steuerung des Krans (10) auszugeben.

10. Vorrichtung (22) nach Anspruch 7, wobei die Auswertungseinheit (32) ausgebildet ist, um aus dem Satz räumlicher Koordinaten der Messpunkte (28) einen longitudinalen Versatz der Fracht (12) zum Spreader (18) zu bestimmen, und die Ausgabeeinheit (34) ausgebildet ist, um den longitudinalen Versatz an eine Bedienperson und/oder an eine Steuerung des Krans (10) auszugeben.

11. Vorrichtung (22) nach Anspruch 7, wobei die Auswertungseinheit (32) ausgebildet ist, um aus dem Satz räumlicher Koordinaten der Messpunkte (28) einen Winkel (50) zwischen der Oberseite (26) der Fracht (12) und einer Heberichtung (52), in der die Fracht (12) vom Kran (10) angehoben wird, zu ermitteln, und die Ausgabeeinheit (34) ausgebildet ist, um den ermittelten Winkel (50) an eine Bedienperson und/oder an eine Steuerung des Krans (10) auszugeben.

12. Verfahren (40) zum Überwachen einer zu verladenden Fracht (12), insbesondere eines oder mehrerer Container (14), wobei das Verfahren (40) die folgenden Schritte umfasst:
- Erfassen (42) wenigstens eines Satz räumlicher Koordinaten von Messpunkten (28) mittels eines Sensors (24), wobei die Messpunkte (28) in einem Raumbereich liegen, der die Fracht (12) umfasst,
- Ermitteln (44) zumindest eines Teils einer Kontur der Fracht (12) aus dem Satz räumlicher Koordinaten der Messpunkte (28),
- Vergleichen (46) der ermittelten Kontur der Fracht (12) mit wenigstens einer vorgegebenen Kontur, und
- Ausgeben (48) eines auf einem Ergebnis des Vergleichs basierenden Signals.

13. Verfahren (40) nach Anspruch 12, wobei die vorgegebene Kontur eine Oberseite einer Fracht umfasst.

14. Verfahren (40) nach einem der Ansprüche 12 oder 13, wobei eine erste vorgegebene Kontur eine Oberseite eines einzelnen Containers, und/oder eine zweite vorgegebene Kontur eine Oberseite zweier hintereinander angeordneter Container umfasst.

15. Verfahren (40) nach einem der Ansprüche 12 oder 13, wobei eine erste vorgegebene Kontur eine Oberseite eines 40 Fuß Containers, und/oder eine zweite vorgegebene Kontur eine Oberseite eines 20 Fuß Containers und/oder eine dritte vorgegebene Kontur eine Oberseite zweier hintereinander angeordneter 20 Fuß Container umfasst.
